# EUROPEAN PATENT APPLICATION

(11) **EP 4 495 838 A1**
(43) Date of publication of application: **22.01.2025**
(21) Application number: 24183997.6
(22) Date of filing: 24.06.2024
(51) Int. Cl.: G06N 5/01, G06N 7/01

(54) **DATA PROCESSING PROGRAM, DATA PROCESSING DEVICE, AND DATA PROCESSING METHOD**

(30) Priority: 18.07.2023 JP 2023116455
(71) Applicant: Fujitsu Limited, Kawasaki-shi, Kanagawa 211-8588 (JP)
(72) Inventor: YONEOKA, Noboru, Kawasaki-shi, Kanagawa, 211-8588 (JP)
(74) Representative: Hoffmann Eitle

(57) **Abstract**

A data processing program causing a computer to execute: receiving user definition information including: function definition information defining an objective function of a combinatorial optimization problem and neighborhood definition information defining neighborhood states at a time of searching for a solution to the problem by a local search; generating an optimization system using the user definition information and base information indicating processing independent of: a definition of the function and a definition of the neighborhood states; receiving a coefficient in the function; and executing the optimization system to: calculate a change amount of a value of the function when a state represented by state variables in the function transitions to the neighborhood states, using the function definition information, the neighborhood definition information, and the coefficient, select a first state among the neighborhood states based on the change amount, and update the state variables to the first state.

## Description

### FIELD

The embodiments discussed herein are related to a program, a data processing device, and a data processing method.

### BACKGROUND

Various problems in the real world (hereinafter abbreviated as real problems) may be expressed as a combinatorial optimization problem. In a case of solving the combinatorial optimization problem, the problem is converted into a format determined by an optimization system to be used. This conversion is called formulation. For example, in a case of an optimization system using an Ising machine, the combinatorial optimization problem may be formulated into an objective function in a quadratic unconstrained binary optimization (QUBO) format. A user causes the optimization system to carry out a solution search, reflects the obtained solution search result in a real problem, and checks whether or not an appropriate solution has been obtained.

There has been traditionally a case where a coefficient included in the objective function is designated by the user according to the combinatorial optimization problem to be calculated.

Japanese Laid-open Patent Publication No. 2021-131611, Japanese Laid-open Patent Publication No. 2016-103282, U.S. Patent Application Publication No. 2018/0365586, and U.S. Patent Application Publication No. 2019/0102353 are disclosed as related art.

### SUMMARY

### TECHNICAL PROBLEM

According to the existing techniques, the objective function may be defined only within a range defined in the optimization system. For example, according to an optimization system using an Ising machine for a quadratic objective function, an objective function having a cubic or quartic term may not be directly handled. Furthermore, it is not possible to add a solution method specialized for the problem that the user wants to solve to the optimization system.

In such a case, the user may construct an original optimization system from zero by him/herself, but the construction takes a lot of man-hours. Thus, it is difficult to search for a solution by an optimization system suitable for the problem that the user wants to solve.

In one aspect, an object of the embodiments is to provide a program, a data processing device, and a data processing method capable of searching for a solution with an optimization system suitable for a problem that a user wants to solve.

### SOLUTION TO PROBLEM

According to an aspect of the embodiments, there is provided a data processing program comprising instructions which, when executed by a computer, cause the computer to execute processing including: receiving an input of user definition information that includes: function definition information and neighborhood definition information, the function definition information defining an objective function of a combinatorial optimization problem, the neighborhood definition information defining one or more neighborhood states at a time of searching for a solution to the combinatorial optimization problem by a local search; generating an optimization system configured to search for the solution to the combinatorial optimization problem by the local search, based on the user definition information and base information stored in a memory, the base information indicating processing independent of: a definition of the objective function, and a definition of the one or more neighborhood states; receiving an input of a value of a coefficient included in the objective function; and executing the optimization system to cause the optimization system to: a) calculate a change amount of a value of the objective function when a state represented by a value of a plurality of state variables included in the objective function transitions to the one of more neighborhood states based on the function definition information, the neighborhood definition information, and the value of the coefficient, b) select a first neighborhood state among the one or more neighborhood states based on the change amount, and c) update the value of the plurality of state variables to a value of the first neighborhood state.

### ADVANTAGEOUS EFFECTS OF INVENTION

In one aspect, the embodiments enable a solution search with an optimization system suitable for a problem that a user wants to solve.

### BRIEF DESCRIPTION OF DRAWINGS

FIG. 1 is a diagram illustrating an exemplary data processing device according to a first embodiment;
FIG. 2 is a block diagram illustrating exemplary hardware of a data processing device according to a second embodiment;
FIG. 3 is a block diagram illustrating exemplary functions of the data processing device;
FIG. 4 is a diagram illustrating exemplary implementation of processing definition of an initial solution generation unit;
FIG. 5 is a diagram illustrating exemplary implementation of processing definition of a start solution generation unit;
FIG. 6 is a diagram illustrating an exemplary local search unit;
FIG. 7 is a flowchart illustrating a flow of an exemplary processing procedure at a time of executing an optimization system; and
FIG. 8 is a flowchart illustrating a flow of an exemplary procedure of a local search process.

### DESCRIPTION OF EMBODIMENTS

Hereinafter, modes for carrying out the embodiments will be described with reference to the drawings.

### (First Embodiment)

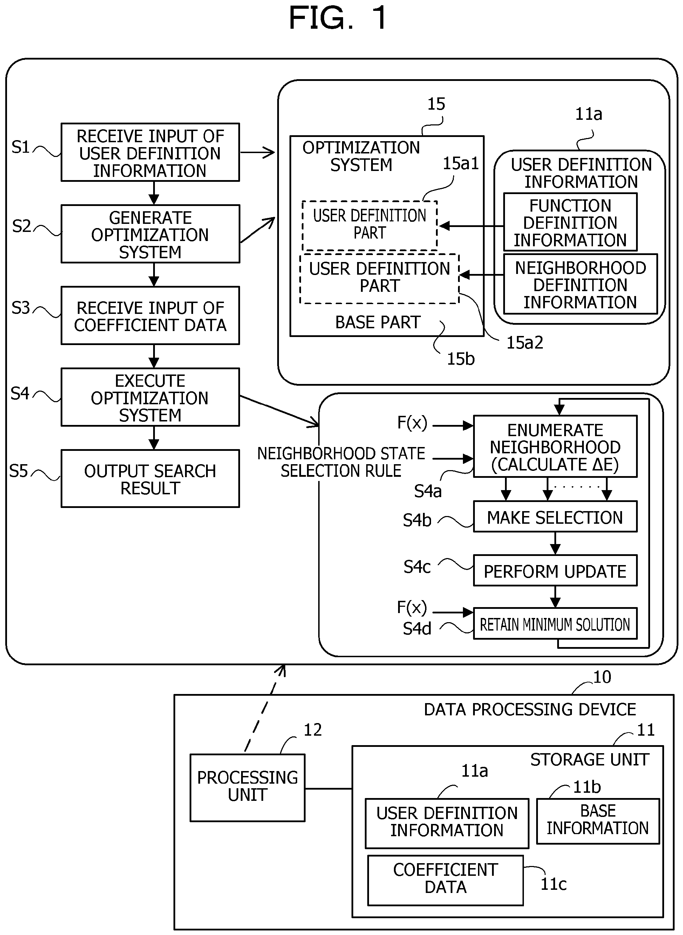

FIG. 1 is a diagram illustrating an exemplary data processing device according to a first embodiment. A data processing device 10 according to the first embodiment may be a client device, or may be a server device. The data processing device 10 may be called a computer.

The data processing device 10 according to the first embodiment includes a storage unit 11 and a processing unit 12.

The storage unit 11 is a volatile storage device (e.g., electronic circuit such as dynamic random access memory (DRAM)), or a non-volatile storage device (e.g., electronic circuit such as flash memory, hard disk drive (HDD), etc.). The storage unit 11 may include an electronic circuit such as a register.

The storage unit 11 stores user definition information 11a, base information 11b, and coefficient data 11c to be described later. Furthermore, the storage unit 11 may store calculation conditions for a solution search and the like.

The processing unit 12 is implemented by, for example, a processor that is hardware such as a central processing unit (CPU), a graphics processing unit (GPU), or a digital signal processor (DSP). The processor executes, for example, a program stored in a memory (which may be the storage unit 11) such as a random access memory (RAM). A set of processors may be referred to as a multiprocessor or simply "processors". Furthermore, the processing unit 12 may be implemented using an electronic circuit such as an application specific integrated circuit (ASIC) or a field programmable gate array (FPGA).

The processing unit 12 performs a process of steps S1 to S5 as follows.

Step S1: The processing unit 12 receives an input of the user definition information 11a. The user definition information 11a includes function definition information and neighborhood definition information.

The function definition information is information that defines an objective function (F(x)) of a combinatorial optimization problem. In the function definition information, an objective function of various combinatorial optimization problems, such as a linear programming problem and a quadratic programming problem, may be defined. For example, in addition to a target quadratic objective function in an Ising machine, a cubic or higher-order objective function or a complex objective function may be directly defined.

In the function definition information, for example, the definition of F(x) itself is expressed in a program format such as a function. For example, a quartic objective function of F(x) = A₀x₀x₁x₂x₃ + B₀x₀x₁x₂ + B₁x₁x₂x₃ + B₂x₂x₃x₀ + C₀x₀x₁ + C₁x₂x₃ + D₀x₂ may be defined by the function definition information. The references x₀ to x₃ are called state variables. A combination of values of x₀ to x₃ is called a state. A state represents a solution. For example, a solution that minimizes the value of F(x) is an optimum solution. By inverting a sign of each term of F(x) from + to -, a solution that maximizes the value of F(x) may be regarded as an optimum solution.

The neighborhood definition information is information that defines one or more neighborhood states at a time of searching for a solution to a combinatorial optimization problem by a local search. In the neighborhood definition information, what kind of solution is set as a neighborhood state for a certain solution (state) is defined. For example, when a state variable included in the objective function is a binary variable of 0 or 1, the neighborhood state may be defined as a state that changes a value of any one of all state variables from 0 to 1 or from 1 to 0. In a case where the state variable included in the objective function is an integer variable, for example, a user may freely define the neighborhood state as eight patterns of ±(1, 2, 4, 8) per integer variable, or the like.

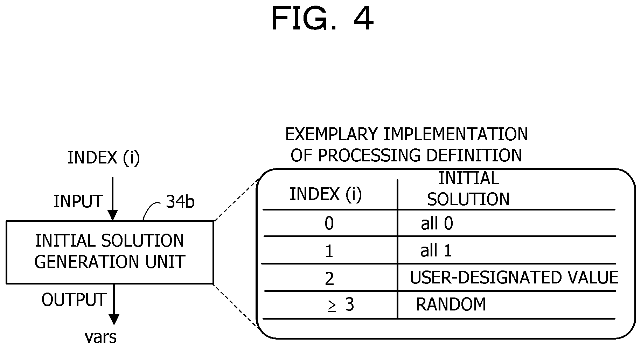

Furthermore, the user definition information 11a may include information indicating processing definition of initial solution generation processing or the like (see FIG. 4 and the like to be described later).

The user definition information 11a as described above is input to the data processing device 10 by an operation of an input device (not illustrated) performed by the user, for example. In a case where the data processing device 10 is a server device, the user definition information 11a is transferred from a client device to the data processing device 10 via a network, and is input. The input user definition information 11a is stored in the storage unit 11.

Step S2: The processing unit 12 generates an optimization system that searches for a solution to a combinatorial optimization problem by a local search based on the user definition information 11a and the base information 11b.

The base information 11b is information indicating processing independent of the definition of the objective function and the neighborhood state. The base information 11b may also be regarded as information that indicates a part corresponding to a basic algorithm in a solution search process.

Examples of the processing independent of the definition of the objective function and the neighborhood state include interactive interface processing with a program that performs the process of steps S1 to S5. Furthermore, examples of the processing independent of the definition of the objective function and the neighborhood state include processing of managing a solution in the middle of a search, processing related to a solution search performed while appropriately calling a part (hereinafter referred to as user definition part) to be processed based on the user definition information 11a, and the like.

For example, the processing unit 12 compiles the user definition information 11a and the base information 11b described in a program format, thereby generating a file of an optimization program in a format that may be executed by a computer. In this case, an optimization program including a user definition part and a part that performs processing based on the base information 11b (hereinafter referred to as base part) is generated (constructed) as an optimization system. Note that, in the data processing device 10, a configuration including a hardware part that executes processing of the user definition part and a hardware part that executes processing of the base part based on the optimization program may also be referred to as an optimization system.

Furthermore, the processing unit 12 may construct the optimization system including the user definition part and the base part by programming the FPGA included in the processing unit 12 based on the user definition information 11a and the base information 11b.

FIG. 1 schematically illustrates a generated optimization system 15. The optimization system 15 includes user definition parts 15a1 and 15a2 that perform processing based on the input user definition information 11a, and a base part 15b that performs processing based on the base information 11b.

Step S3: The processing unit 12 receives an input of a value of a coefficient included in the objective function. In a case where the objective function is F(x) = A₀x₀x₁x₂x₃ + B₀x₀x₁x₂ + B₁x₁x₂x₃ + B₂x₂x₃x₀ + C₀x₀x₁ + C₁x₂x₃ + D₀x₂, A₀, B₀ to B₂, C₀, C₁, and D₀ are coefficients. Hereinafter, the input value of the coefficient will be referred to as coefficient data 11c. The coefficient data 11c is input to the data processing device 10 by, for example, an operation of an input device (not illustrated) performed by the user. In the case where the data processing device 10 is a server device, the coefficient data 11c is transferred from the client device to the data processing device 10 via the network, and is input. The coefficient data 11c is stored in the storage unit 11.

Step S4: The processing unit 12 executes the optimization system. For example, the optimization system is executed by the optimization program generated as described above being executed. Alternatively, the optimization system is executed by processing of the FPGA in which the optimization system is constructed as described above being started. Note that the optimization system may be executed when the processing unit 12 receives an execution instruction from the user.

With the optimization system being executed, the following process is performed.

Step S4a: the processing unit 12 calculates ΔE based on the function definition information, the neighborhood definition information, and the coefficient data 11c. ΔE is a change amount of a value of the objective function (which may also be referred to as evaluation value hereinafter) when a state represented by values of a plurality of state variables included in the objective function transitions to one or more neighborhood states. The one or more neighborhood states are enumerated based on the neighborhood definition information included in the user definition information 11a.

Step S4b: The processing unit 12 selects a first neighborhood state for which the transition is permitted among the one or more neighborhood states based on ΔE of each of the one or more neighborhood states. For example, the processing unit 12 performs the selection described above according to a selection method such as a greedy algorithm (also referred to as greedy), a simulated annealing (SA) method, or a tabu search method.

For example, according to the greedy algorithm, the neighborhood state with the smallest ΔE (positive or negative value) among the one or more neighborhood states is selected as the first neighborhood state. In the SA method, based on a result of comparison between ΔE and a predetermined value, it is determined whether or not to permit transition to a neighborhood state that causes the ΔE. Examples of the predetermined value include a noise value obtained based on a random number and a value of a temperature parameter. For example, log(rand) × T, which is an example of the noise value obtained based on a uniform random number (rand, 0 < rand < 1) and a temperature parameter (T), may be used as the predetermined value. In this case, even if ΔE is a positive value, the transition may be permitted. When there is a plurality of neighborhood states for which the transition is permitted, the processing unit 12 may select one of them as the first neighborhood state according to a predetermined rule.

The selection method to be applied may be designated by the user. The selection method to be applied may be included in the user definition information 11a.

Step S4c: The processing unit 12 updates the current values of the plurality of state variables to a value of the first neighborhood state. In a similar manner to step S4a, the processing of step S4c is processing according to the function definition information and the neighborhood definition information included in the user definition information 11a.

Step S4d: The processing unit 12 calculates an evaluation value of the updated solution (first neighborhood state). When the calculated evaluation value is smaller than the minimum value of the evaluation value obtained so far, it is retained as an updated minimum solution (= local solution).

Among the steps S4a to S4d described above, for example, the part of performing the processing of steps S4a and S4c corresponds to the user definition part in the optimization system, and other parts correspond to the base part.

The process of steps S4a to S4d as described above is repeated until a predetermined termination condition is satisfied. In a case where the SA method is applied, for example, each time the processing of step S4b is repeated a predetermined number of times, the processing unit 12 decreases the value of the temperature parameter (T) described above according to a predetermined temperature parameter change schedule.

Step S5: The processing unit 12 outputs a search result of the solution obtained by the execution of the optimization system. For example, the processing unit 12 outputs the minimum solution obtained so far and the evaluation value thereof. The processing unit 12 may display the search result on a display device (not illustrated), or may transmit it to another information processing apparatus (e.g., client device) via a network.

Note that the processing unit 12 may store the minimum solution described above in a solution pool, and may generate a start solution when the local search is performed again using a plurality of solutions stored in the solution pool. Such a process will be described in a second embodiment.

As described above, the data processing device 10 according to the first embodiment receives an input of the user definition information 11a. The user definition information 11a includes the function definition information that defines the objective function of the combinatorial optimization problem, and the neighborhood definition information that defines one or more neighborhood states at the time of searching for a solution to the combinatorial optimization problem by the local search. Then, the data processing device 10 generates an optimization system that searches for a solution to the combinatorial optimization problem by the local search based on the base information 11b, which indicates processing independent of the definition of the objective function and the neighborhood state and is stored in the storage unit 11 in advance, and the user definition information 11a. The data processing device 10 receives the input of the value of the coefficient included in the objective function, and executes the optimization system, thereby calculating ΔE accompanying the transition to each neighborhood state based on the function definition information, the neighborhood definition information, and the value of the coefficient. Then, the first neighborhood state for which the transition is permitted is selected based on ΔE, and the values of the plurality of state variables are updated to the value of the first neighborhood state.

According to such a data processing device 10, it becomes possible to use the definition of the objective function and the neighborhood state suitable for the problem that the user wants to solve, whereby the solution search may be performed by the optimization system suitable for the problem that the user wants to solve.

For example, according to an existing optimization system using an Ising machine for a quadratic objective function, an objective function having a cubic or quartic term may not be directly handled. Thus, an objective function having a cubic or quartic term may be converted into a quadratic form handled by the Ising machine. However, in that case, the number of state variables included in the objective function increases after the conversion, and it becomes difficult to obtain an optimum solution or a better solution close to it within a desired time. As described above, according to the data processing device 10 of the first embodiment, it becomes possible to use the definition of the objective function and the neighborhood state suitable for the problem that the user wants to solve, whereby the number of state variables does not increase with the conversion of the objective function. As a result, it may be expected to obtain a better solution to a problem having a complex objective function, which is difficult to solve by the existing optimization system.

Furthermore, since the user does not need to create the base information 11b, it becomes possible to construct an optimization system that searches for a solution to a combinatorial optimization problem represented by any objective function with a minimum description.

### (Second Embodiment)

Next, a second embodiment will be described.

A data processing device 20 according to the second embodiment may be a client device, or may be a server device. The data processing device 20 may be called a computer.

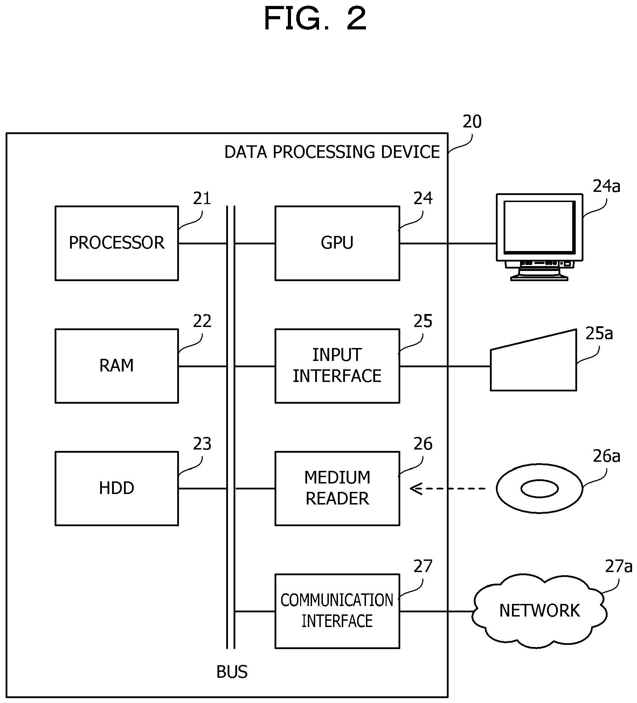

FIG. 2 is a block diagram illustrating exemplary hardware of the data processing device according to the second embodiment.

The data processing device 20 is, for example, a computer, and includes a processor 21, a RAM 22, an HDD 23, a GPU 24, an input interface 25, a medium reader 26, and a communication interface 27. The units described above are coupled to a bus.

The processor 21 is a processor such as a GPU or a CPU including an arithmetic circuit that executes a program command. The processor 21 loads at least a part of a program and data stored in the HDD 23 into the RAM 22, and executes the program. Note that the processor 21 may include a plurality of processor cores. Furthermore, the data processing device 20 may include a plurality of processors. Note that a set of the plurality of processors (multiprocessor) may be called a "processor".

The RAM 22 is a volatile semiconductor memory that temporarily stores the program to be executed by the processor 21 and data to be used by the processor 21 for arithmetic operations. Note that the data processing device 20 may include a memory of a type different from the RAM 22, or may include a plurality of memories.

The HDD 23 is a non-volatile storage device that stores programs of software such as an operating system (OS), middleware, and application software, and data. The programs include, for example, a program for causing the data processing device 20 to perform a process of generating an optimization system and searching for a solution to a combinatorial optimization problem. Note that the data processing device 20 may include another type of storage device such as a flash memory or a solid state drive (SSD), or may include a plurality of non-volatile storage devices.

The GPU 24 outputs an image to a display 24a coupled to the data processing device 20 in accordance with a command from the processor 21. As the display 24a, a cathode ray tube (CRT) display, a liquid crystal display (LCD), a plasma display panel (PDP), an organic electro-luminescence (OEL) display, or the like may be used.

The input interface 25 obtains input signals from an input device 25a coupled to the data processing device 20, and outputs them to the processor 21. As the input device 25a, a pointing device such as a mouse, a touch panel, a touch pad, or a trackball, a keyboard, a remote controller, a button switch, or the like may be used. Furthermore, a plurality of types of input devices may be coupled to the data processing device 20.

The medium reader 26 is a reading device that reads a program and data recorded on a recording medium 26a. As the recording medium 26a, for example, a magnetic disk, an optical disk, a magneto-optical disk (MO), a semiconductor memory, or the like may be used. Examples of the magnetic disk include a flexible disk (FD) and an HDD. Examples of the optical disk include a compact disc (CD) and a digital versatile disc (DVD).

The medium reader 26 copies, for example, a program and data read from the recording medium 26a to another recording medium such as the RAM 22 or the HDD 23. The read program is executed by, for example, the processor 21. Note that the recording medium 26a may be a portable recording medium, and may be used for distribution of the program and data. Furthermore, the recording medium 26a and the HDD 23 may be referred to as computer-readable recording media.

The communication interface 27 is an interface that is coupled to a network 27a and communicates with another information processing apparatus via the network 27a. The communication interface 27 may be a wired communication interface coupled to a communication device such as a switch by a cable, or may be a wireless communication interface coupled to a base station via a wireless link.

Next, functions and processing procedures of the data processing device 20 will be described.

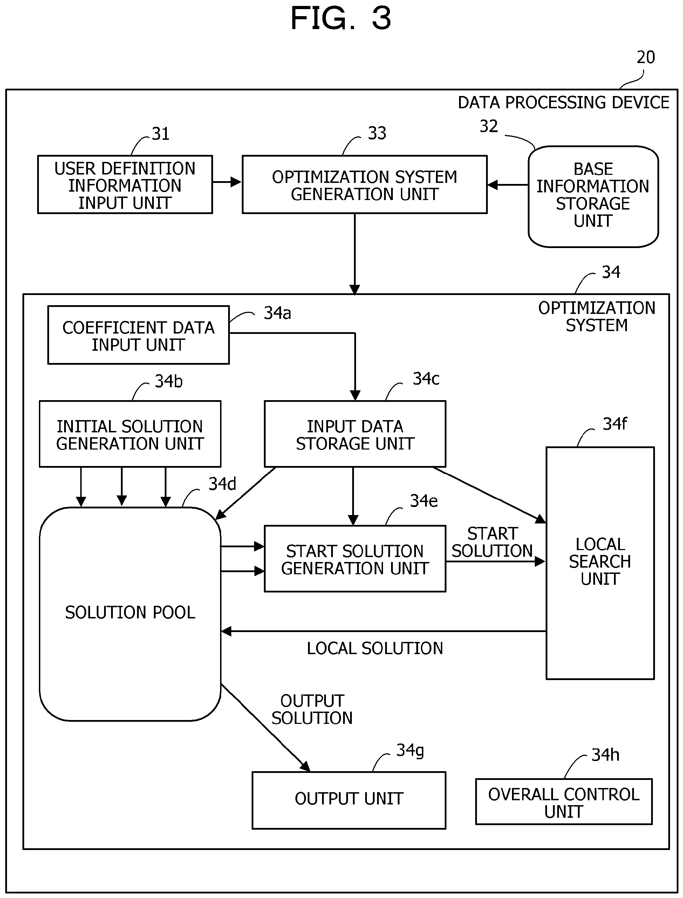

FIG. 3 is a block diagram illustrating exemplary functions of the data processing device.

The data processing device 20 includes a user definition information input unit 31, a base information storage unit 32, an optimization system generation unit 33, and an optimization system 34. Furthermore, the optimization system 34 includes a coefficient data input unit 34a, an initial solution generation unit 34b, an input data storage unit 34c, a solution pool 34d, a start solution generation unit 34e, a local search unit 34f, an output unit 34g, and an overall control unit 34h. Those functions may also be regarded as exemplary functions implemented by the storage unit 11 and the processing unit 12 illustrated in FIG. 1.

Each of the functions described above may be implemented using, for example, a program module to be executed by the processor 21 or a storage area (register or cache memory) in the processor 21. The base information storage unit 32, the input data storage unit 34c, and the solution pool 34d may be implemented using a storage area secured in the RAM 22 or the HDD 23.

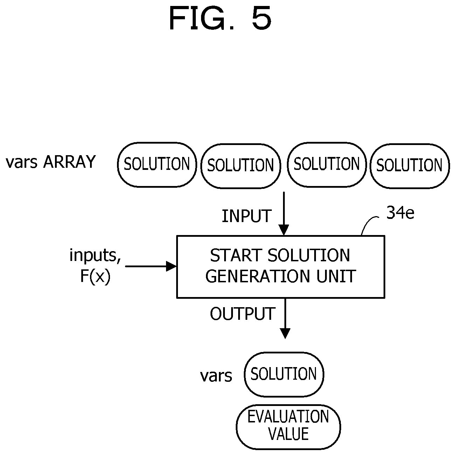

The user definition information input unit 31 receives an input of user definition information. In a similar manner to the user definition information 11a described in the first embodiment, the user definition information includes function definition information and neighborhood definition information. Moreover, in the second embodiment, the user definition information includes processing definition information indicating processing definition of initial solution generation processing and start solution generation processing. An example of the processing definition of the initial solution generation processing and the start solution generation processing will be described later (see FIGs. 4 and 5). The user definition information is described in a program format, for example. Note that, in a case of not performing the initial solution generation processing or the start solution generation processing, the user definition information may not include the processing definition information thereof.

The base information storage unit 32 stores base information indicating processing independent of definition of an objective function and a neighborhood state. The base information is also described in the program format, for example.

The optimization system generation unit 33 generates the optimization system 34 based on the user definition information and the base information. For example, the optimization system generation unit 33 compiles the user definition information and the base information described in the program format, thereby generating a file of an optimization program in a format that may be executed by a computer. In this case, the optimization program including a user definition part and a base part is generated (constructed) as an optimization system. The generated optimization program may be stored in the RAM 22 or in the HDD 23.

The coefficient data input unit 34a belonging to the base part receives an input of coefficient data, which is a value of a coefficient included in the objective function. The coefficient data input unit 34a assigns a file path of the coefficient data to the input data storage unit 34c.

The initial solution generation unit 34b belonging to the user definition part is called at a time of initialization. The initial solution generation unit 34b generates and outputs an initial solution for a local search. The processing of the initial solution generation unit 34b is defined by the processing definition information included in the user definition information.

FIG. 4 is a diagram illustrating exemplary implementation of the processing definition of the initial solution generation unit.

The initial solution generation unit 34b generates and outputs an initial solution as illustrated in FIG. 4 according to input identification information (index (i) in the example of FIG. 4). In the exemplary implementation of the processing definition of FIG. 4, when i = 0, an initial solution in which values of all state variables included in the objective function are 0 is generated. In the case of i = 1, an initial solution in which values of all state variables included in the objective function are 1 is generated. In the case of i = 2, a value (fixed value) designated by a user in advance is output as an initial solution. Examples of the fixed value include a value calculated in advance by preprocessing, manual calculation by the user, or the like. In the case of i ≥ 3, an initial solution in which values of all state variables included in the objective function are randomly determined is generated.

In this manner, the initial solution generation unit 34b may generate various initial solutions only by changing the value of the index input to the initial solution generation unit 34b.

For example, the same number of indexes (i) as the number of solutions stored in the solution pool 34d are given to the initial solution generation unit 34b, and the same number of initial solutions as the number of solutions stored in the solution pool 34d are output. The output initial solution is represented as a structure (vars) storing values of all state variables. Since vars is dependent on the function definition information of the objective function included in the user definition information, the initial solution generation unit 34b belongs to the user definition part.

The input data storage unit 34c reads the coefficient data from the file designated by the file path given from the coefficient data input unit 34a, and retains the value of the coefficient of the objective function. The value of the coefficient is stored in the structure (inputs). Since inputs is dependent on the function definition information of the objective function included in the user definition information, the input data storage unit 34c also belongs to the user definition part.

The solution pool 34d belonging to the base part stores a plurality of solutions. Moreover, the solution pool 34d performs the following process under the control of the overall control unit 34h.

At the time of initialization, the solution pool 34d stores a plurality of initial solutions output from the initial solution generation unit 34b. In a case where the solution pool 34d stores 16 solutions, for example, indexes of i = 0 to 15 are given to the initial solution generation unit 34b, and 16 initial solutions are output. Then, the solution pool 34d stores the 16 initial solutions. At this time, the solution pool 34d calculates and retains an evaluation value of each initial solution based on the objective function defined by the function definition information and the coefficient data stored in inputs.

At the time of solution search, the solution pool 34d outputs the stored solution to the start solution generation unit 34e. A local solution (hereinafter, solution A) output from the local search unit 34f is input to the solution pool 34d. Then, the solution pool 34d compares the evaluation value of the solution A with a solution (hereinafter, solution B) having the highest (worst) evaluation value among the stored solutions. When the evaluation value of the solution B > the evaluation value of the solution A, the solution pool 34d replaces the solution B with the solution A. However, if the solution A has already been stored, the solution pool 34d skips the processing of comparison with the solution B. That is, the solution pool 34d does not retain duplicate solutions.

The start solution generation unit 34e belonging to the user definition part generates and outputs a new solution (start solution) when the local search is started again from the plurality of solutions output from the solution pool 34d. The start solution generation unit 34e may also generate a start solution from the plurality of initial solutions stored in the solution pool 34d at the time of initialization. The processing of the start solution generation unit 34e is defined by the processing definition information included in the user definition information.

FIG. 5 is a diagram illustrating exemplary implementation of the processing definition of the start solution generation unit.

In the exemplary implementation of FIG. 5, the start solution generation unit 34e receives four solutions (four vars arrays) stored in the solution pool 34d, and generates and outputs one start solution (represented by one vars). The start solution generation unit 34e generates one start solution according to the processing definition. For example, the start solution generation unit 34e may generate the start solution by randomly selecting one of the four input solutions and changing some of the values of the state variables included in the selected solution. Furthermore, the start solution generation unit 34e may randomly select two of the four input solutions and generate the start solution by a genetic algorithm or the like using the selected two solutions.

Moreover, the start solution generation unit 34e calculates and outputs an evaluation value of the generated start solution based on the function definition information that defines inputs and F(x).

The local search unit 34f includes the base part and the user definition part.

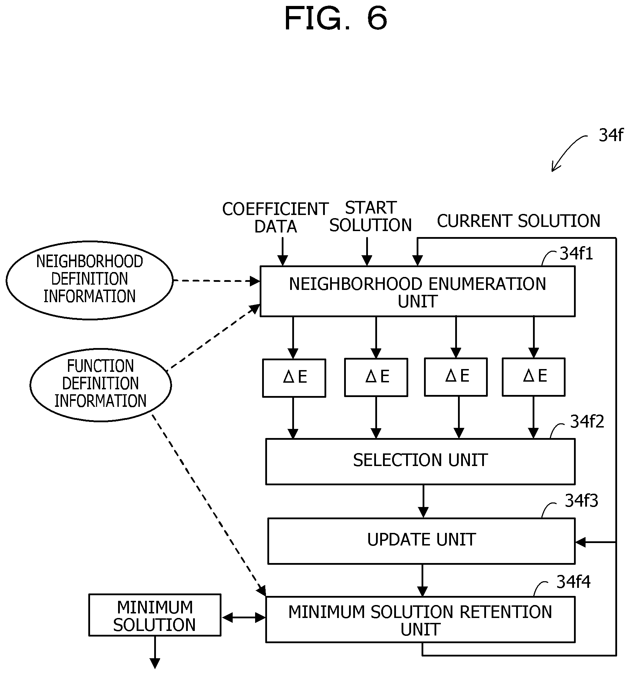

FIG. 6 is a diagram illustrating an example of the local search unit.

The local search unit 34f includes a neighborhood enumeration unit 34f1, a selection unit 34f2, an update unit 34f3, and a minimum solution retention unit 34f4.

The neighborhood enumeration unit 34f1 belongs to the user definition part. The neighborhood enumeration unit 34f1 enumerates one or more neighborhood states for the current solution (or start solution) based on the neighborhood definition information included in the user definition information. The current solution is represented by a structure (vars). Since the content of the structure is freely described by the user, state variables may be freely defined regardless of the objective function.

In a case where the objective function is F(x) = A₀x₀x₁x₂x₃ + B₀x₀x₁x₂ + B₁x₁x₂x₃ + B₂x₂x₃x₀ + C₀x₀x₁ + C₁x₂x₃ + D₀x₂, the number of state variables is four. Thus, values of the four state variables (x₀, x₁, x₂, and x₃) are stored in vars. A₀, B₀ to B₂, C₀, C₁, and D₀ are coefficients, which are stored in the structure (inputs). In a case where each state variable is a binary variable of 0 or 1 and the neighborhood state is defined as a state in which a value of any one of all state variables is changed from 0 to 1 or from 1 to 0, there are four neighborhood states for the current solution.

Note that, when there is a plurality of defined neighborhood states, the neighborhood enumeration unit 34f1 may enumerate some of those neighborhood states.

The neighborhood enumeration unit 34f1 reads the coefficient data stored in inputs, and calculates a change amount (ΔE) of the value (evaluation value) of the objective function defined by the function definition information for each of the enumerated neighborhood states. When it is assumed that the evaluation value of the current solution is F(x) and the evaluation value of the neighborhood state is F(x'), ΔEᵢ for the neighborhood state in which a value of a state variable xᵢ, which is a binary variable of 0 or 1, is changed from xᵢ to 1 - xᵢ may be calculated by an equation of ΔEᵢ = F(x') - F(x). FIG. 6 illustrates an exemplary case where ΔE for four neighborhood states is calculated.

The selection unit 34f2 belongs to the base part. The selection unit 34f2 selects a first neighborhood state for which transition is permitted among the one or more neighborhood states based on ΔE of each of the enumerated one or more neighborhood states. For example, the selection unit 34f2 carries out the selection described above according to a selection method such as a greedy algorithm, an SA method, or a tabu search method.

For example, according to the greedy algorithm, the neighborhood state with the smallest ΔE (positive or negative value) among the one or more neighborhood states is selected as the first neighborhood state. In the SA method, based on a result of comparison between ΔE and a predetermined value, it is determined whether or not to permit transition to a neighborhood state that causes the ΔE. Examples of the predetermined value include a noise value obtained based on a random number and a value of a temperature parameter. For example, log(rand) × T, which is an example of the noise value obtained based on a uniform random number (rand, 0 < rand < 1) and a temperature parameter (T), may be used as the predetermined value. In this case, even if ΔE is a positive value, the transition may be permitted. When there is a plurality of neighborhood states for which the transition is permitted, the selection unit 34f2 may select one of them as the first neighborhood state according to a predetermined rule.

The selection method to be applied may be designated by the user. The selection method to be applied may be included in the user definition information.

The selection unit 34f2 outputs an index of the state variable whose value is changed to transition to the selected first neighborhood state. Note that the selection unit 34f2 may add data indicating validity or invalidity to the index and output the index. For example, no neighborhood state may be selected in the SA method. In that case, data indicating invalidity is added to the index.

The update unit 34f3 belongs to the user definition part. The update unit 34f3 receives the index output from the selection unit 34f2, and updates the current solution stored in vars to the first neighborhood state. For example, when the selection unit 34f2 has output the index = s, the update unit 34f3 updates, among the state variables of the current solution stored in vars, a value of a state variable xₛ, which is a binary variable, to xₛ = 1 - xₛ.

Note that, in a case where the data indicating invalidity is added to the index output from the selection unit 34f2, the update unit 34f3 does not need to update the current solution.

The minimum solution retention unit 34f4 belongs to the base part. The minimum solution retention unit 34f4 retains the current solution and the minimum solution obtained so far. Furthermore, the minimum solution retention unit 34f4 calculates an evaluation value of the updated solution (first neighborhood state). When the calculated evaluation value is smaller than the minimum value of the evaluation value obtained so far, the minimum solution retention unit 34f4 updates the minimum solution obtained so far with the updated solution.

The minimum solution retention unit 34f4 outputs, as a local solution, the minimum solution retained when a predetermined termination condition is satisfied.

The output unit 34g in FIG. 3 outputs the solution stored in the solution pool 34d when the predetermined termination condition is satisfied.

The overall control unit 34h controls each unit of the optimization system 34.

The entire processing procedure of the data processing device 20 is similar to the process of steps S1 to S5 illustrated in FIG. 1. That is, the user definition information input unit 31 receives an input of the user definition information (step S1), and the optimization system generation unit 33 generates the optimization system 34 (step S2). Furthermore, the coefficient data input unit 34a receives an input of the coefficient data (step S3). Then, the optimization system 34 is executed (step S4), and the output unit 34g outputs the solution stored in the solution pool 34d as a search result of the solution obtained by the execution of the optimization system 34 (step S5). The output unit 34g may output, together with the solution stored in the solution pool 34d, the evaluation value thereof. The output unit 34g may display the search result on the display 24a, or may transmit it to another information processing apparatus (e.g., client device) via the network 27a.

Hereinafter, an exemplary processing procedure at the time of execution of the optimization system 34 in the data processing device 20 will be described.

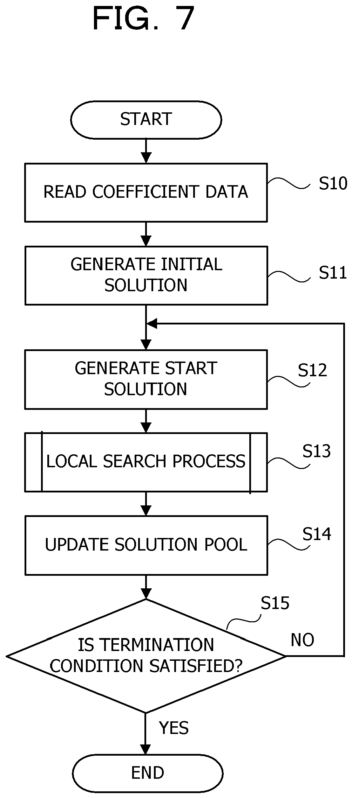

FIG. 7 is a flowchart illustrating a flow of the exemplary processing procedure at the time of execution of the optimization system.

Step S10: The input data storage unit 34c reads the coefficient data from the file designated by the file path given from the coefficient data input unit 34a, and retains the value of the coefficient of the objective function. The value of the coefficient is stored in the structure (inputs).

Step S11: The initial solution generation unit 34b generates and outputs an initial solution for starting a local search. The initial solution output from the initial solution generation unit 34b is stored in the solution pool 34d.

Step S12: The start solution generation unit 34e generates a new solution (start solution) from the plurality of solutions output from the solution pool 34d.

Step S13: The local search unit 34f executes a local search process. An exemplary procedure of the local search process will be described later.

Step S14: the solution pool 34d receives the local solution (solution A) output from the local search unit 34f, and compares the evaluation value of the solution A with the solution (hereinafter, solution B) having the highest evaluation value among the stored solutions. If the evaluation value of the solution B > the evaluation value of the solution A, the solution pool 34d performs update processing of replacing the solution B with the solution A. By repeating the start solution generation processing and the local search process, the solution in the solution pool 34d is gradually updated to a better solution, and approaches the optimum solution.

Step S15: The overall control unit 34h determines whether or not the predetermined termination condition is satisfied. For example, the overall control unit 34h determines that the termination condition is satisfied when the upper limit time specified by the user has elapsed or when the repetitive processing is performed the number of times specified by the user.

If the overall control unit 34h determines that the predetermined termination condition is not satisfied, the process from step S12 is repeated. If the overall control unit 34h determines that the predetermined termination condition is satisfied, the execution of the optimization system 34 is terminated.

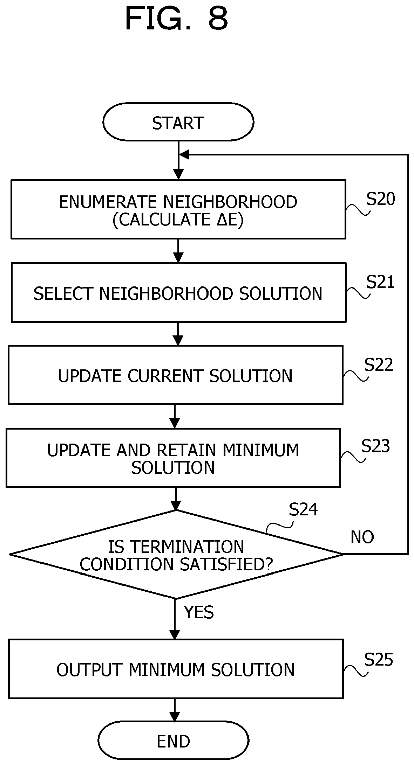

FIG. 8 is a flowchart illustrating a flow of an exemplary procedure of the local search process.

Step S20: The neighborhood enumeration unit 34f1 enumerates one or more neighborhood states for the current solution (start solution at the time of initialization) based on the neighborhood definition information. Then, the neighborhood enumeration unit 34f1 calculates a change amount (ΔE) of the evaluation value for the enumerated neighborhood states.

Step S21: The selection unit 34f2 selects the first neighborhood state (neighborhood solution) for which the transition is permitted among the one or more neighborhood states based on ΔE of each of the one or more neighborhood states.

Step S22: The update unit 34f3 updates the current solution to the first neighborhood state selected by the selection unit 34f2 by changing the value of the state variable included in the current solution.

Step S23: The minimum solution retention unit 34f4 calculates the evaluation value of the first neighborhood state, and updates and retains the minimum solution obtained so far with the updated solution if the evaluation value is smaller than the minimum value of the evaluation value obtained so far.

Step S24: The overall control unit 34h determines whether or not the predetermined termination condition for the local search process is satisfied. For example, the overall control unit 34h determines that the termination condition is satisfied when the upper limit time specified by the user has elapsed or when the repetitive processing is performed the number of times specified by the user.

If the overall control unit 34h determines that the predetermined termination condition is not satisfied, the process from step S20 is repeated. If the overall control unit 34h determines that the predetermined termination condition is satisfied, processing of step S25 is performed.

Step S25: The minimum solution retention unit 34f4 outputs, as a local solution, the minimum solution retained when the predetermined termination condition is satisfied. As a result, one local search process is terminated, and the process returns to the processing of step S14 in FIG. 7.

According to the data processing device 20 of the second embodiment as described above, effects similar to those of the data processing device 10 of the first embodiment may be obtained. That is, it becomes possible to use the definition of the objective function and the neighborhood state suitable for the problem that the user wants to solve, whereby the solution search may be performed by the optimization system suitable for the problem that the user wants to solve. Furthermore, since the user does not need to create the base information, it becomes possible to construct an optimization system that searches for a solution to a combinatorial optimization problem represented by any objective function with a minimum description.

Moreover, in the data processing device 20 according to the second embodiment, the user definition information includes the processing definition information indicating the processing definition of the processing of generating the initial solution for the local search. Additionally, the user definition part of the optimization system 34 includes the initial solution generation unit 34b that generates and outputs the initial solution according to the input identification information based on the processing definition information. As a result, the initial solution suitable for the problem that the user wants to solve may be applied to the local search. For example, in a problem in which most of values of all state variables of the optimum solution are assumed be 0, it is sufficient if the user inputs 0 as the index (i) as illustrated in FIG. 4. In a problem in which most of values of all state variables of the optimum solution are assumed be 1, it is sufficient if the user inputs 1 as the index (i) as illustrated in FIG. 4.

Furthermore, in the data processing device 20 according to the second embodiment, the user definition information includes the processing definition information indicating the processing definition of the processing of generating, from a plurality of solutions, the start solution at the time of starting the local search again. Additionally, the user definition part of the optimization system 34 includes the start solution generation unit 34e that generates and outputs the start solution from the plurality of solutions stored in the solution pool 34d based on the processing definition information. As a result, it becomes possible to suppress the condition that the solution obtained by the local search fails to escape from a certain local solution and the solution stored in the solution pool 34d is not updated. Thus, it becomes possible to increase the possibility that the solution stored in the solution pool 34d is updated to a better solution.

Note that, as described above, the processing contents described above may be implemented by causing the data processing device 20 to execute a program.

The program may be recorded in a computer-readable recording medium (e.g., recording medium 26a). As the recording medium, for example, a magnetic disk, an optical disk, a magneto-optical disk, a semiconductor memory, or the like may be used. Examples of the magnetic disk include an FD and an HDD. Examples of the optical disk include a CD, a CD-recordable (R)/rewritable (RW), a DVD, and a DVD-R/RW. The program may be recorded in a portable recording medium and distributed. In that case, the program may be copied from the portable recording medium to another recording medium (e.g., HDD 23) and executed.

While one aspect of the program, the data processing device, and the data processing method according to the embodiments has been described based on the embodiments, those are merely examples, and are not limited to the descriptions above.

## Claims

1. A data processing program comprising instructions which, when executed by a computer, cause the computer to execute processing comprising:
receiving an input of user definition information that includes: function definition information and neighborhood definition information, the function definition information defining an objective function of a combinatorial optimization problem, the neighborhood definition information defining one or more neighborhood states at a time of searching for a solution to the combinatorial optimization problem by a local search;
generating an optimization system configured to search for the solution to the combinatorial optimization problem by the local search, based on the user definition information and base information stored in a memory, the base information indicating processing independent of: a definition of the objective function, and a definition of the one or more neighborhood states;
receiving an input of a value of a coefficient included in the objective function; and
executing the optimization system to cause the optimization system to:
a) calculate a change amount of a value of the objective function when a state represented by a value of a plurality of state variables included in the objective function transitions to the one of more neighborhood states based on the function definition information, the neighborhood definition information, and the value of the coefficient,
b) select a first neighborhood state among the one or more neighborhood states based on the change amount, and
c) update the value of the plurality of state variables to a value of the first neighborhood state.

2. The data processing program according to claim 1, wherein the optimization system includes a base part that performs processing based on the base information, and a user definition part that performs processing based on the user definition information.

3. The data processing program according to claim 2, wherein
the user definition information includes first processing definition information that indicates processing definition of processing that generates an initial solution for the local search, and
the user definition part includes an initial solution generation unit that generates and outputs the initial solution according to input identification information based on the first processing definition information.

4. The data processing program according to claim 2, wherein
the optimization system performs the local search by repeating the calculation of the change amount, the selection of the first neighborhood state, and the update of the value of the plurality of state variables to the value of the first neighborhood state, and stores a solution obtained by the local search in a solution pool,
the user definition information includes second processing definition information that indicates processing definition of processing that generates, from a plurality of solutions, a start solution at a time of starting the local search again, and
the user definition part includes a start solution generation unit that generates and outputs the start solution from the plurality of solutions stored in the solution pool based on the second processing definition information.

5. A data processing device comprising:
a storage unit configured to store base information that indicates processing independent of: a definition of an objective function of a combinatorial optimization problem, and a definition of one or more neighborhood states at a time of searching for a solution to the combinatorial optimization problem by a local search; and
a processing unit configured to perform processing including:
receiving an input of user definition information that includes: function definition information and neighborhood definition information, the function definition information defining the objective function, and the neighborhood definition information defining the one or more neighborhood states;
generating an optimization system configured to search for the solution to the combinatorial optimization problem by the local search, based on the user definition information and the base information;
receiving an input of a value of a coefficient included in the objective function; and
executing the optimization system to cause the optimization system to:
a) calculate a change amount of a value of the objective function when a state represented by a value of a plurality of state variables included in the objective function transitions to the one of more neighborhood states based on the function definition information, the neighborhood definition information, and the value of the coefficient,
b) select a first neighborhood state among the one or more neighborhood states based on the change amount, and
c) update the value of the plurality of state variables to a value of the first neighborhood state.

6. A data processing method implemented by a computer, the data processing method comprising:
receiving an input of user definition information that includes: function definition information and neighborhood definition information, the function definition information defining an objective function of a combinatorial optimization problem, the neighborhood definition information defining one or more neighborhood states at a time of searching for a solution to the combinatorial optimization problem by a local search;
generating an optimization system configured to search for the solution to the combinatorial optimization problem by the local search, based on the user definition information and base information stored in a memory, the base information indicating processing independent of: a definition of the objective function, and a definition of the one or more neighborhood states;
receiving an input of a value of a coefficient included in the objective function; and
executing the optimization system to cause the optimization system to:
a) calculate a change amount of a value of the objective function when a state represented by a value of a plurality of state variables included in the objective function transitions to the one of more neighborhood states based on the function definition information, the neighborhood definition information, and the value of the coefficient,
b) select a first neighborhood state among the one or more neighborhood states based on the change amount, and
c) update the value of the plurality of state variables to a value of the first neighborhood state.
